# FASCICULE DE BREVET EUROPEEN

(11) **EP 2 604 156 B1**
(45) Date de publication et mention de la délivrance du brevet: **17.04.2019**
(21) Numéro de dépôt: 12195610.6
(22) Date de dépôt: 05.12.2012
(51) Int. Cl.: A47J 37/06, A47J 36/04, A47J 43/20, A21B 3/13

(54) **Accessoire pour appareil de cuisson**
Accessory for a cooking appliance
Zubehör für Kochgerät

(30) Priorité: 15.12.2011 FR 1161671
(43) Date de publication de la demande: 19.06.2013
(73) Titulaire: Lagrange, 69390 Vourles (FR)
(72) Inventeur: Gidoin, Hervé, 69004 Lyon (FR); Lagrange, Philippe, 69390 Charly (FR)
(74) Mandataire: Chevalier, Renaud Philippe

(56) Documents cités:
- WO-A1-02/05596
- DE-A1- 4 408 832
- DE-A1- 19 922 439
- US-A- 5 481 963
- US-A1- 2007 068 919
- US-A1- 2009 255 413

## Description

L'invention concerne un accessoire pour un appareil de cuisson d'une composition alimentaire ainsi qu'un appareil de cuisson équipé de cet accessoire.

L'invention trouve plus particulièrement application pour un appareil de cuisson tel qu'une crêpière.

Une crêpière connue de l'état de la technique comporte un premier plateau de cuisson monté sur un socle et associé à des moyens de chauffage, notamment une résistance électrique. Ce premier plateau de cuisson comprend une empreinte circulaire pour la réalisation de crêpes conformées à la forme de cette empreinte. La crêpière comprend par ailleurs un second plateau de cuisson amovible, pouvant être monté à la place du premier plateau de cuisson. Ce second plateau comprend une pluralité d'empreintes circulaires de plus petit diamètre pour la réalisation de crêpes conformées à la forme de ces empreintes. Les premier et second plateaux de cuisson sont réalisés en un matériau thermiquement conducteur et revêtus d'une surface anti-adhésive.

En cours d'utilisation, si un utilisateur souhaite retirer le second plateau de cuisson pour utiliser le premier plateau de cuisson de manière à alterner la réalisation de crêpes de petit et grand diamètre, le second plateau de cuisson étant à température élevée, l'utilisateur doit attendre le refroidissement du second plateau ou utiliser un torchon ou un gant pour ne pas se brûler les mains. Aussi, cette opération est peu sécurisante.

En outre, les premier et second plateaux présentent un poids non négligeable ce qui rend leur manipulation à chaud d'autant plus délicate.

Enfin, la chute du premier ou second plateau est susceptible d'entrainer la rupture du plateau ou d'endommager le sol de la pièce.

L'invention vise à remédier à tout ou partie de ces inconvénients.

Par ailleurs, le document US 2009/255413 décrit un accessoire selon le préambule de la revendication 1.

L'invention concerne ainsi un accessoire pour un appareil de cuisson d'une composition alimentaire comportant un plateau de cuisson, l'accessoire étant réalisé, au moins en partie, en un matériau thermorésistant, anti-adhésif et déformable, tel qu'un silicone,
l'accessoire comprenant une plaque conçue pour couvrir le plateau de cuisson, la plaque présentant :
- un bord délimitant une forme sensiblement identique à la forme délimitée par un bord du plateau de cuisson, et
- au moins une ouverture dont le pourtour est fermé, chaque ouverture formant un pochoir destiné à recevoir la composition alimentaire dans le but de conformer celle-ci à la forme de l'ouverture, et
l'accessoire comprenant des moyens de rigidification caractérisé en ce que chaque bord de l'accessoire comprend un retour conçu pour couvrir le bord du plateau de cuisson, lorsque la plaque est placée sur le plateau de cuisson.

La nature déformable du matériau dans lequel est réalisé l'accessoire permet, en cas de chute, de pallier le risque de rupture de l'accessoire ou d'endommagement du sol.

La nature thermo-résistante et anti-adhésive du matériau dans lequel est réalisé l'accessoire confère à cet accessoire une excellente tenue à la température et limite le risque de détérioration du plateau de cuisson.

L'accessoire selon l'invention est ainsi avantageux en ce qu'un utilisateur peut alterner, de façon simple et sécurisée, la réalisation de crêpes à la forme de chaque ouverture de l'accessoire et à la forme d'une empreinte formée sur le plateau de cuisson.

En outre, l'accessoire selon l'invention présente un coût de fabrication restreint en comparaison d'un plateau de cuisson additionnel réalisé en un matériau thermiquement conducteur et revêtu d'une surface anti-adhésive.

Ainsi, lorsque l'accessoire est monté sur le plateau de cuisson, et qu'un utilisateur s'appuie par accident contre un bord du plateau de cuisson, celui-ci est protégé contre une éventuelle brûlure.

L'accessoire selon l'invention peut présenter une ou plusieurs des caractéristiques suivantes.

De préférence, l'accessoire comprend au moins un organe de préhension, tel qu'une languette, faisant saillie en direction de l'extérieur.

La présence d'un ou plusieurs organes de préhension permet de retirer l'accessoire à mains nues lorsque l'appareil de cuisson est en conditions d'utilisation.

Avantageusement, le bord comprend :
- une première portion inclinée de haut en bas, de l'intérieur vers l'extérieur, relativement à la plaque et délimitant une première arête avec la plaque, cette première arête étant agencée pour reposer contre le bord du plateau de cuisson lorsque la plaque est placée sur le plateau de cuisson à température de cuisson, et
- une seconde portion, tournée vers le bas, transversale à la première portion et délimitant une seconde arête avec la première portion, cette seconde arête étant agencée pour reposer contre le bord du plateau de cuisson lorsque la plaque est placée sur le plateau de cuisson à température ambiante.

Lors du montage de l'accessoire sur le plateau, l'accessoire est à température ambiante. Dans ces conditions, la seconde arête repose contre le bord du plateau de cuisson. Un jeu est ménagé entre la plaque et le plateau de cuisson.

Lors de la cuisson, l'accessoire s'échauffe progressivement et se dilate thermiquement. Le bord du plateau de cuisson glisse sur la seconde portion, jusqu'à ce que la première arête repose contre le bord du plateau 104 de cuisson. Un jeu apparait alors entre la seconde arête et le bord du plateau de cuisson tandis que le jeu entre la plaque et le plateau de cuisson est sensiblement nul.

Ainsi, malgré la dilatation thermique de l'accessoire, celui-ci reste centré sur la plaque.

De préférence, la première portion du bord et la plaque forment un angle compris entre 135° et 155°, et la seconde portion du bord et la première portion du bord forment un angle compris entre 35° et 55°.

Suivant une forme d'exécution, l'accessoire est réalisé en totalité dans le matériau thermorésistant, anti-adhésif et déformable, et les moyens de rigidification comprennent une pluralité de nervures, de préférence s'entrecroisant pour former une structure quadrillée.

De telles nervures permettent d'une part de rigidifier l'accessoire, et d'autre part de surélever la plaque, et éventuellement chaque retour par rapport au plateau de cuisson. Dans ces conditions, les contraintes thermiques appliquées à l'accessoire sont réduites et la tenue de l'accessoire est améliorée.

L'accessoire peut être fabriqué par moulage.

De préférence, l'épaisseur des nervures est supérieure ou égale à deux fois l'épaisseur de la plaque.

Avantageusement, le pourtour de chaque ouverture comprend un retour destiné à être tourné vers le plateau de cuisson, et à affleurer le plateau de cuisson.

Dans ces conditions, la régularité du contour du produit de la cuisson de la composition alimentaire est assurée par les forces capillaires exercées entre le retour et le plateau de cuisson.

Suivant une autre forme d'exécution, l'accessoire est réalisé seulement en partie dans le matériau thermorésistant, anti-adhésif et déformable, et les moyens de rigidification comprennent une âme, de préférence réalisée en métal ou en fibre de verre, noyée dans le matériau thermorésistant, anti-adhésif et déformable.

L'invention concerne également un appareil de cuisson comportant :
- un plateau de cuisson, et
- un accessoire tel que présenté ci-avant.

Suivant une caractéristique, l'appareil comporte un anneau conçu pour être monté sur le plateau de cuisson afin de maintenir l'accessoire en position sur le plateau de cuisson.

Par exemple, l'appareil de cuisson est une crêpière.

L'invention sera mieux comprise à l'aide de la description qui suit en référence au dessin schématique annexé représentant, à titre d'exemple deux crêpières selon l'invention.
Figure 1 est une vue en perspective d'une première crêpière ;
Figure 2 est une vue en perspective de la crêpière de figure 1 lors du retrait d'un premier accessoire;
Figure 3 est une vue en perspective de la crêpière de figure 1 dépourvue de l'accessoire de figure 2;
Figure 4 est une vue en coupe de la crêpière de figure 1, lors du montage de l'accessoire de figure 2;
Figure 5 est une vue de dessous de l'accessoire de figure 2 ;
Figure 6 est une vue en perspective d'une seconde crêpière ;
Figure 7 est une vue en coupe d'un seconde accessoire équipant la crêpière de figure 6 ;
Figure 8 est une vue en coupe de la crêpière de figure 6, lorsque l'accessoire de figure 7 est à température ambiante ; et
Figure 9 est une vue en coupe de la crêpière de figure 6, lorsque l'accessoire de figure 7 est à température de cuisson

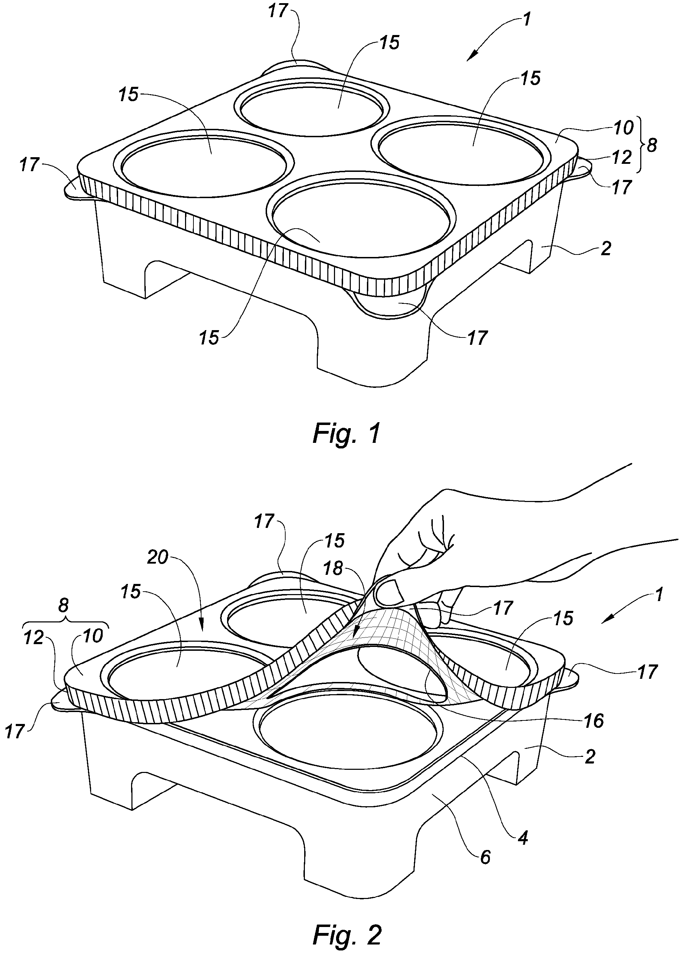

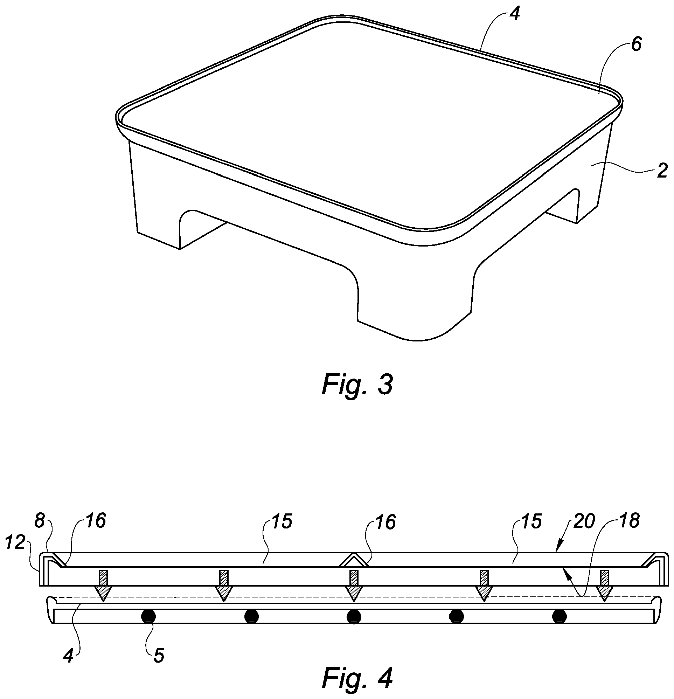

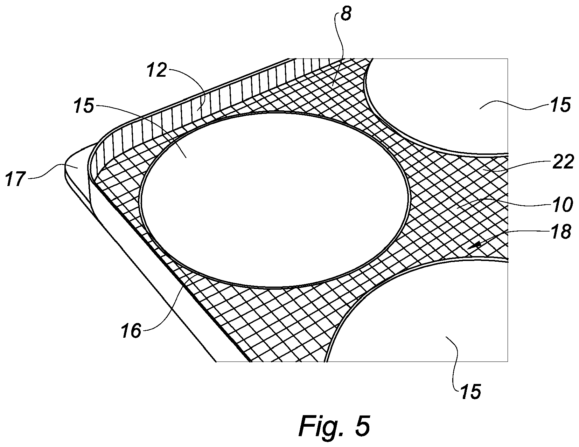

Les figures 1 et 2 représentent une crêpière 1. La crêpière 1 comporte un socle 2 sur lequel est monté un plateau 4 de cuisson (représenté aux figures 2 et 3) associé à une résistance 5 électrique chauffante (représentée à la figure 5).

Le plateau 4 est réalisé en un matériau thermiquement conducteur revêtu d'une surface anti-adhésive, telle qu'en polytétrafluoroéthylène, également connu sous la marque Téflon. Le plateau 4 comprend un bord 6 délimitant une forme carrée. Le bord 6 comprend un retour délimitant une empreinte. L'empreinte est destinée à recevoir de la pâte à crêpe dans le but de conformer celle-ci à la forme de l'empreinte.

La crêpière 1 comporte un accessoire 8 réalisé en un matériau thermorésistant, anti-adhésif et déformable. Ici, l'accessoire 8 est réalisé en silicone.

L'accessoire 8 comprend une plaque 10 conçue pour couvrir le plateau 4 et un retour 12 conçu pour couvrir le bord 6 du plateau 4 (tel que représenté à la figure 1).

La plaque 10 présente un bord 12 délimitant une forme sensiblement identique à la forme délimitée par le bord 6 du plateau de cuisson 4. Ici, la forme délimitée par le bord 12 est carrée.

Le périmètre du bord 12 est sensiblement inférieur au périmètre du bord 6. Dans ces conditions, l'accessoire 8 peut être monté en force sur le plateau 4 et lorsque la température de l'accessoire 8 est élevée par le plateau 4, cet accessoire 8 reste centré sur le plateau 4, malgré la dilatation thermique.

La plaque 10 présente une pluralité d'ouvertures 15 dont le pourtour est fermé. Chaque ouverture 15 forme un pochoir destiné à recevoir de la pâte à crêpe dans le but de conformer celle-ci à la forme de l'ouverture 15. Le pourtour de chaque ouverture 15 délimite une forme circulaire. Le pourtour de chaque ouverture 15 comprend un retour 16 (représenté aux figures 4 et 5) conçu pour être tourné vers le plateau 4 et affleurer le plateau 4, de préférence sans contact avec le plateau 4.

L'accessoire 8 comprend quatre organes de préhension 17, faisant saillie en direction de l'extérieur. Ici, les organes de préhension 17 prennent la forme de languette.

L'accessoire 8 présente une face 18 tournée vers le plateau 4 et une face 20 opposée à la face 18. La face 18 comprend une pluralité de nervures 22 (représentées à la figure 5) formant moyens de rigidification. Les nervures 22 s'entrecroisent pour former une structure en relief quadrillée. L'épaisseur des nervures 22 est ici supérieure ou égale à deux fois l'épaisseur de la plaque 10.

A titre d'exemple, l'épaisseur de la plaque est sensiblement égal à 2mm et l'épaisseur des nervures est sensiblement égal à 5mm.

Les nervures 22 s'étendent avantageusement sur la totalité de la face 20. Dans ces conditions, lorsque l'accessoire 8 est monté sur le plateau 4, les nervures 22 prennent appui contre le plateau 4 tandis que la plaque 10, et les retours 14 et 16 sont maintenus distants du plateau 4 par les nervures 22.

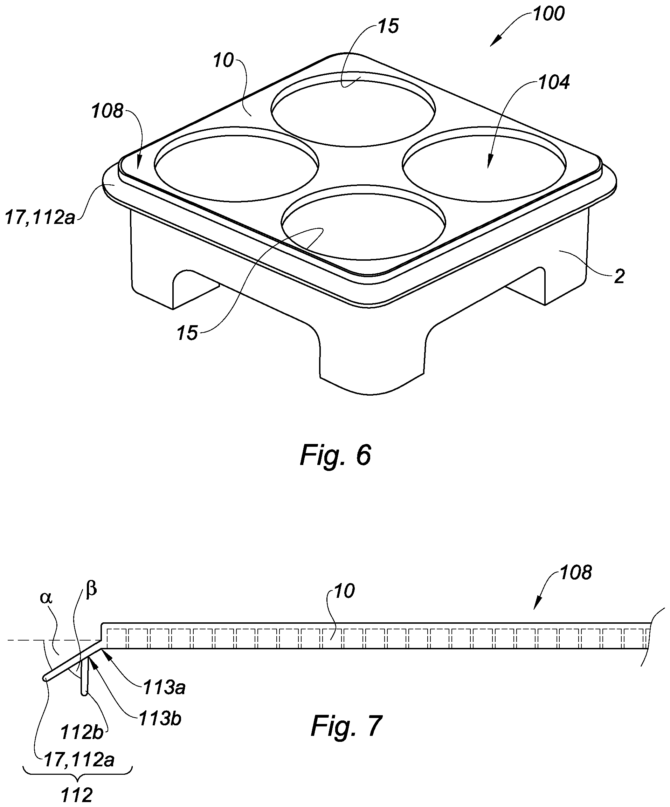

La figure 6 représente une crêpière 100 identique à la crêpière 1 hormis le fait que le plateau 4 de cuisson est remplacé par un plateau 104 et l'accessoire 8 est remplacé par un accessoire 108.

Le plateau 104 de cuisson diffère du plateau 4 en ce que que son bord 106 ne délimite pas d'empreinte pour la cuisson de la composition alimentaire.

L'accessoire 108 diffère de l'accessoire 8 en ce que le bord 112 de la plaque 10 comprend une première portion 112a inclinée de haut en bas, de l'intérieur vers l'extérieur, relativement à la plaque 10 et délimitant une première arête 113a avec la plaque 10. La première portion 112a et la plaque 10 forment un angle α compris entre 135° et 155°. La première portion 112a forme également organe de préhension 17.

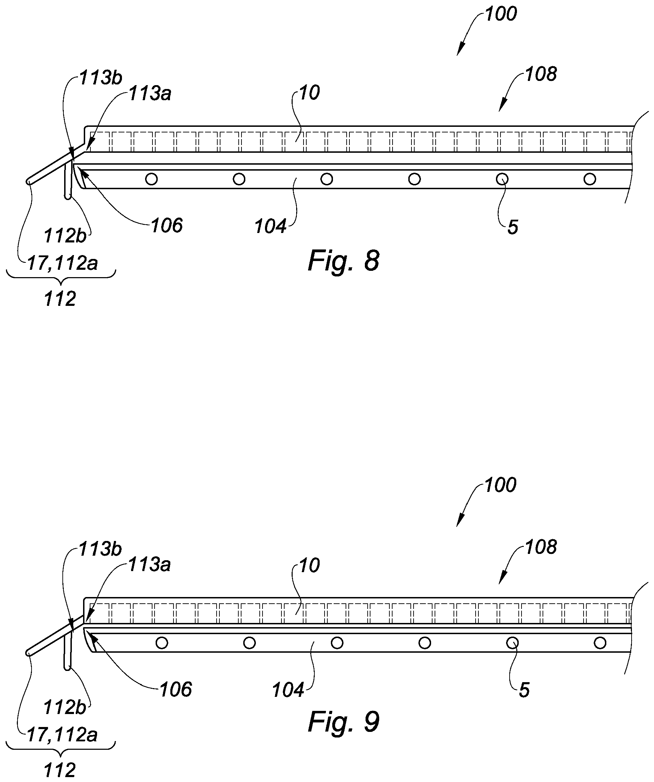

Le bord 112 de l'accessoire 108 comprend également une seconde portion 112b, tournée vers le bas, transversale à la première portion 112a, délimitant une seconde arête 113b avec la première portion 112a. La seconde portion 108b et la première portion 108b forment un angle β compris entre 35° et 55°. Lors du montage de l'accessoire 108 sur le plateau 104 (représenté à la figure 8), l'accessoire 108 est à température ambiante. Dans ces conditions, l'arête 113b repose contre le bord 106 du plateau 104 de cuisson. Un jeu est ménagé entre la plaque 10 et le plateau 104 de cuisson.

Lors de la cuisson (représenté à la figure 9), l'accessoire 108 s'échauffe progressivement et se dilate thermiquement. Le bord 106 du plateau 104 de cuisson glisse sur la seconde portion 112a, jusqu'à ce que l'arête 113a repose contre le bord 106 du plateau 104 de cuisson. Un jeu apparait alors entre l'arête 113b et le bord 106 du plateau de cuisson 104 tandis que le jeu entre la plaque 10 et le plateau 104 de cuisson est sensiblement nul.

Ainsi, malgré la dilatation thermique de l'accessoire 108, celui-ci reste centré sur la plaque.

Comme il va de soi, l'invention ne se limite pas aux seules forme d'exécution de l'accessoire et de l'appareil de cuisson décrites ci-dessus à titre d'exemple, elle en embrasse au contraire toutes les variantes de réalisation.

Dans une variante, les pourtours des ouvertures 15 délimitent des formes carrées, triangulaires, en étoile, en coeur ou autres.

Dans une autre variante, la plaque 10 présente uniquement une ouverture 15.

Dans une autre variante, le bord 6 du plateau 4 délimite une forme rectangulaire, circulaire ou autre, et par conséquent le bord 12 de la plaque 10 délimite une forme rectangulaire, circulaire ou autre.

## Revendications

1. Accessoire (8 ; 108) pour un appareil de cuisson (1) d'une composition alimentaire comportant un plateau (4) de cuisson, l'accessoire (8 ; 108) étant réalisé, au moins en partie, en un matériau thermorésistant, anti-adhésif et déformable, tel qu'un silicone,
l'accessoire (8 ; 108) comprenant une plaque (10) conçue pour couvrir le plateau (4 ; 104) de cuisson, la plaque (10) présentant :
- un bord (12 ; 112) délimitant une forme sensiblement identique à la forme délimitée par un bord (6 ; 106) du plateau (4 ; 104) de cuisson, et
- au moins une ouverture (15) dont le pourtour est fermé, chaque ouverture (15) formant un pochoir destiné à recevoir la composition alimentaire dans le but de conformer celle-ci à la forme de l'ouverture (15), et
l'accessoire (8 ; 108) comprenant des moyens de rigidification, **caractérisé en ce que** chaque bord (12 ; 112) de l'accessoire comprend un retour conçu pour couvrir le bord (6 ; 106) du plateau (4 ; 104) de cuisson, lorsque la plaque (10) est placée sur le plateau (4) de cuisson.

2. Accessoire (8 ; 108) selon la revendication 1, **caractérisé en ce qu'**il comprend au moins un organe de préhension (17), tel qu'une languette, faisant saillie en direction de l'extérieur.

3. Accessoire (108) selon l'une quelconque des revendications précédentes, **caractérisé en ce que** le bord (112) comprend :
- une première portion (112a) inclinée de haut en bas, de l'intérieur vers l'extérieur, relativement à la plaque (10) et délimitant une première arête (113a) avec la plaque (10), cette première arête (113a) étant agencée pour reposer contre le bord (106) du plateau (104) de cuisson lorsque la plaque (10) est placée sur le plateau (104) de cuisson à température de cuisson ; et
- une seconde portion (112b), tournée vers le bas, transversale à la première portion (112a) et délimitant une seconde arête (113b) avec la première portion (112a), cette seconde arête (113b) étant agencée pour reposer contre le bord (106) du plateau (104) de cuisson lorsque la plaque (10) est placée sur le plateau (104) de cuisson à température ambiante.

4. Accessoire (108) selon la revendication 3, **caractérisé en ce que** la première portion (112a) du bord (106) et la plaque (10) forment un angle (α) compris entre 135° et 155° ; et
**en ce que** la seconde portion (112b) du bord (106) et la première portion (112a) du bord (106) forment un angle (β) compris entre 35° et 55°.

5. Accessoire (8 ; 108) selon l'une quelconque des revendications 1 à 4, **caractérisé en ce qu'**il est réalisé en totalité dans le matériau thermorésistant, anti-adhésif et déformable, et **en ce que** les moyens de rigidification comprennent une pluralité de nervures (22), de préférence s'entrecroisant pour former une structure quadrillée.

6. Accessoire (8 ; 108) selon la revendication 5, **caractérisé en ce que** l'épaisseur des nervures (22) est supérieure ou égale à deux fois l'épaisseur de la plaque (10).

7. Accessoire (8 ; 108) selon l'une quelconque des revendications 1 à 6, **caractérisé en ce que** le pourtour de chaque ouverture (15) comprend un retour destiné à être tourné vers le plateau (4 ; 104) de cuisson, et à affleurer le plateau (4 ; 104) de cuisson.

8. Accessoire selon l'une quelconque des revendications 1 à 4, **caractérisé en ce qu'**il est réalisé seulement en partie dans le matériau thermorésistant, anti-adhésif et déformable, et **en ce que** les moyens de rigidification comprennent une âme, de préférence réalisée en métal ou en fibre de verre, noyée dans le matériau thermorésistant, anti-adhésif et déformable.

9. Appareil (1 ; 100) de cuisson comportant un plateau de cuisson, et un accessoire selon l'une quelconque des revendications 1 à 8.

10. Appareil (1 ; 100) de cuisson selon la revendication 9, **caractérisé en ce qu'**il comporte un anneau conçu pour être monté sur le plateau (4 ; 104) de cuisson afin de maintenir l'accessoire en position sur le plateau (4 ; 104) de cuisson.

11. Appareil (1 ; 100) de cuisson selon l'une quelconque des revendications 9 ou 10, **caractérisé en ce que** l'appareil (1 ; 100) de cuisson est une crêpière.

## Patentansprüche

1. Zubehör (8; 108) für ein Backgerät (1) einer Nahrungsmittelzusammensetzung, ein Backblech (4) beinhaltend, wobei das Zubehör (8; 108) mindestens teilweise aus einem hitzebeständigen, beschichtungsresistenten und verformbaren Material, wie einem Silikon gefertigt ist,
wobei das Zubehör (8; 108) eine Platte (10) umfasst, die gestaltet ist, um das Backblech (4; 104) abzudecken, wobei die Platte (10) aufweist:
- einen Rand (12; 112), der eine Form eingrenzt, die im Wesentlichen identisch mit der Form ist, die durch einen Rand (6; 106) des Backblechs (4; 104) eingegrenzt wird, und
- mindestens eine Öffnung (15) deren Umfang geschlossen ist, wobei jede Öffnung (15) eine Schablone bildet, die dazu bestimmt ist, die Nahrungsmittelzusammensetzung mit dem Ziel aufzunehmen, diese mit der Form der Öffnung (15) übereinstimmen zu lassen, und
wobei das Zubehör (8; 108) Versteifungsmittel umfasst, **dadurch gekennzeichnet, dass** jeder Rand (12; 112) des Zubehörs eine Rückführung umfasst, die gestaltet ist, um den Rand (6; 106) des Backblechs (4; 104) abzudecken, wenn die Platte (10) auf dem Backblech (4) platziert ist.

2. Zubehör (8; 108) nach Anspruch 1, **dadurch gekennzeichnet, dass** es mindestens ein Greiforgan (17), wie eine Lasche, umfasst, die in der nach außen gerichteten Richtung hervorsteht.

3. Zubehör (108) nach einem der vorstehenden Ansprüche, **dadurch gekennzeichnet, dass** der Rand (112) umfasst:
- einen ersten von oben nach unten, von innen nach außen relativ zu der Platte (10) geneigten, und eine erste Kante (113a) mit der Platte (10) eingrenzenden Abschnitt (112a), wobei diese erste Kante (113a) angeordnet ist, um an dem Rand (106) des Backblechs (104) anzuliegen, wenn die Platte (10) auf dem Backblech (104) auf Backtemperatur platziert ist; und
- einen zweiten, nach unten gedrehten, zum ersten Abschnitt (112a) querlaufenden, und eine zweite Kante (113b) mit dem ersten Abschnitt (112a) eingrenzenden Abschnitt (112b), wobei diese zweite Kante (113b) angeordnet ist, um an dem Rand (106) des Backblechs (104) anzuliegen, wenn die Platte (10) auf dem Backblech (104) auf Umgebungstemperatur platziert ist.

4. Zubehör (108) nach Anspruch 3, **dadurch gekennzeichnet, dass** der erste Abschnitt (112a) des Randes (106) und die Platte (10) einen Winkel (*α*) zwischen 135° und 155° bilden; und
dadurch, dass der zweite Abschnitt (112b) des Randes (106) und der erste Abschnitt (112a) des Randes (106) einen Winkel (ß) zwischen 35° und 55° bilden.

5. Zubehör (8; 108) nach einem der Ansprüche 1 bis 4, **dadurch gekennzeichnet, dass** es gänzlich aus dem hitzebeständigen, beschichtungsresistenten und verformbaren Material gefertigt ist, und dadurch, dass die Versteifungsmittel eine Vielzahl von vorzugsweise ineinandergreifenden Rippen (22) umfassen, um eine karierte Struktur zu bilden.

6. Zubehör (8; 108) nach Anspruch 5, **dadurch gekennzeichnet, dass** die Stärke der Rippen (22) größer oder gleich zweimal der Stärke der Platte (10) ist.

7. Zubehör (8; 108) nach einem der Ansprüche 1 bis 6, **dadurch gekennzeichnet, dass** der Umfang jeder Öffnung (15) eine Rückführung umfasst, die dazu bestimmt ist, zu dem Backblech (4; 104) gedreht zu werden, und das Backblech (4; 104) leicht zu berühren.

8. Zubehör nach einem der Ansprüche 1 bis 4, **dadurch gekennzeichnet, dass** es nur teilweise aus dem hitzebeständigen, beschichtungsresistenten und verformbaren Material gefertigt ist, und dadurch, dass die Versteifungsmittel einen Kern umfassen, der vorzugsweise aus Metall oder aus Glasfaser gefertigt ist, der in das hitzebeständige, beschichtungsresistente und verformbare Material getaucht wird.

9. Backgerät (1; 100), ein Backblech und ein Zubehör nach einem der Ansprüche 1 bis 8 beinhaltend.

10. Backgerät (1; 100) nach Anspruch 9, **dadurch gekennzeichnet, dass** es einen Ring beinhaltet, der gestaltet ist, um auf dem Backblech (4; 104) montiert zu werden, um das Zubehör in Position auf dem Backblech (4; 104) zu halten.

11. Backgerät (1; 100) nach einem der Ansprüche 9 oder 10, **dadurch gekennzeichnet, dass** das Backgerät (1; 100) ein Pfannkucheneisen ist.

## Claims

1. An accessory (8; 108) for an appliance (1) for cooking a food composition including a cooking tray (4), the accessory (8; 108) being made, at least partly, of a heat-resistant, anti-adhesive and deformable material, such as silicone,
the accessory (8; 108) comprising a plate (10) designed to cover the cooking tray (4; 104), the plate (10) having:
- an edge (12; 112) delimiting a shape substantially identical to the shape delimited by an edge (6; 106) of the cooking tray (4; 104), and
- at least one opening (15) whose periphery is closed, each opening (15) forming a stencil intended to receive the food composition in order to conform it to the shape of the opening (15), and
the accessory (8; 108) comprising stiffening means, **characterized in that** each edge (12; 112) of the accessory comprises a fold-back designed to cover the edge (6; 106) of the cooking tray (4; 104) when the plate (10) is placed on the cooking tray (4).

2. The accessory (8; 108) according to claim 1, **characterized in that** it comprises at least one gripping member (17), such as a tab, protruding outwardly.

3. The accessory (108) according to any one of the preceding claims, **characterized in that** the edge (112) comprises:
- a first portion (112a) inclined from top to bottom, from the inside to the outside, with respect to the plate (10) and delimiting a first ridge (113a) with the plate (10), this first ridge (113a) being arranged to rest against the edge (106) of the cooking tray (104) when the plate (10) is placed on the cooking tray (104) at cooking temperature; and
- a second portion (112b), turned downwards, transverse to the first portion (112a) and delimiting a second ridge (113b) with the first portion (112a), this second ridge (113b) being arranged to rest against the edge (106) of the cooking tray (104) when the plate (10) is placed on the cooking tray (104) at ambient temperature.

4. The accessory (108) according to claim 3, **characterized in that** the first portion (112a) of the edge (106) and the plate (10) form an angle (α) comprised between 135° and 155°; and
**in that** the second portion (112b) of the edge (106) and the first portion (112a) of the edge (106) form an angle (β) comprised between 35° and 55°.

5. The accessory (8; 108) according to any one of claims 1 to 4, **characterized in that** it is entirely made of the heat-resistant, anti-adhesive and deformable material, and **in that** the stiffening means comprise a plurality of ribs (22), preferably intersecting to form a grid structure.

6. The accessory (8; 108) according to claim 5, **characterized in that** the thickness of the ribs (22) is larger than or equal to twice the thickness of the plate (10).

7. The accessory (8; 108) according to any one of claims 1 to 6, **characterized in that** the periphery of each opening (15) comprises a fold-back intended to be turned towards the cooking tray (4; 104), and be flush with the cooking tray (4; 104).

8. The accessory according to any one of claims 1 to 4, **characterized in that** it is only partly made of the heat-resistant, anti-adhesive and deformable material, and **in that** the stiffening means comprise a core, preferably made of metal or fiberglass, embedded into the heat-resistant, anti-adhesive and deformable material.

9. The cooking appliance (1; 100) including a cooking tray and an accessory according to any one of claims 1 to 8.

10. The cooking appliance (1; 100) according to claim 9, **characterized in that** it includes a ring designed to be mounted on the cooking tray (4; 104) in order to hold the accessory in position on the cooking tray (4; 104).

11. The cooking appliance (1; 100) according to any one of claims 9 or 10, **characterized in that** the cooking appliance (1; 100) is a griddle.
